# EUROPÄISCHE PATENTSCHRIFT

(11) **EP 2 061 638 B1**
(45) Veröffentlichungstag und Bekanntmachung des Hinweises auf die Patenterteilung: **22.11.2017**
(21) Anmeldenummer: 07803104.4
(22) Anmeldetag: 31.08.2007
(51) Int. Cl.: B29C 47/06, B29C 47/02, B21C 23/24

(54) **VERFAHREN ZUR HERSTELLUNG EINES ZYLINDRISCHEN, STRANGFÖRMIGEN TEILS**
METHOD OF MANUFACTURING COMPOSITE PIPES FROM METAL AND PLASTIC
PROCÉDÉ DE FABRICATION DE TUYAUX COMPOSÉS EN METAL ET PLASTIQUE

(30) Priorität: 02.09.2006 EP 06018394
(43) Veröffentlichungstag der Anmeldung: 27.05.2009
(60) Teilanmeldung: 17196268.1
(73) Patentinhaber: Uponor Innovation AB, 73061 Virsbo (SE)
(72) Erfinder: FREERMANN, Reinhold, 48607 Ochtrup (DE); WINTERSTEIN, Ralf, 98617 Meiningen (DE); RIESSELMANN, Franz-Josef, 49393 Lohne (DE)
(74) Vertreter: Papula Oy
(86) Internationale Anmeldenummer: PCT/EP2007/059099
(87) Internationale Veröffentlichungsnummer: WO 2008/028866

(56) Entgegenhaltungen:
- EP-A- 0 202 953
- WO-A-88/03084
- AU-A- 2 690 971
- DE-A1- 2 139 388
- DATABASE WPI Week 200257 Derwent Publications Ltd., London, GB; AN 2002-529768 XP002421878 & CN 1 342 549 A (ZHOU X) 3. April 2002 (2002-04-03)

## Beschreibung

Die Erfindung betrifft ein Verfahren zur Herstellung eines zylindrischen, strangförmigen Teils. Insbesondere betrifft die Erfindung die Herstellung von Metall-Kunststoff-Verbundrohren, wie sie beispielsweise im Sanitär- und Heizungsbereich Verwendung finden.

Kunststoff-Metall-Verbundrohre erfreuen sich zunehmender Beliebtheit, da sie die Vorteile der plastischen Verformbarkeit von Metallrohren mit den Vorteilen der Korrosionsbeständigkeit von Kunststoffrohren in sich vereinigen.

Derartige Kunststoff-Metall-Verbundrohre lassen sich auf verschiedene Arten und Weisen herstellen. So ist es beispielsweise bekannt, die Metallschicht eines solchen Verbundrohres durch Formen eines Metallstreifens herzustellen, wobei die Längsränder des Metallstreifens einander überlappen und verschweißt oder verklebt sind oder aber die Längsränder des Metallstreifens auf Stoß miteinander verschweißt sind. In das so geformte Metallrohr wird dann innen ein ein- oder mehrlagiges Kunststoffrohr hineinextrudiert. Beispiele für solche Herstellungsverfahren finden sich in DE-A-30 16 134, EP-A-0 353 977, EP-A-0 581 208, EP-A-0 920 972, WO-A-88/03084 und WO-A-01/85430.

Ferner ist es bekannt, das Metallrohr auf einem bereits hergestellten ein- oder mehrschichtigen Kunststoffrohr zu formen. Ein Beispiel für ein solches Herstellungsverfahren ist in EP-A-0 691 193 beschrieben. Weitere Beispiele finden sich in DE-A-43 10 272, DE-A-44 04 492, DE-C-195 36 689.

Schließlich ist es auch bekannt, die Metallschicht eines Kunststoff-Metall-Verbundrohres direkt auf ein bereits hergestelltes Kunststoffrohr durch Strangpressen aufzubringen. In EP-B-0 125 788 ist beschrieben, dass auf ein vorgefertigtes Kunststoffrohr mit radialem Abstand zu diesem ein Metallrohr extrudiert wird, das anschließend durch einen Zieh- oder dergleichen Durchmesserreduktionsprozess in seinem Durchmesser reduziert wird, um fest an dem Kunststoffrohr anzuliegen. Aus US-A-5 222 284 ist es bekannt, ein vorgefertigtes Kunststoffrohr im Durchmesser zu reduzieren, um anschließend um das Kunststoffrohr ein Metallrohr zu extrudieren (durch Strangpressen), woraufhin dann anschließend das im Durchmesser reduzierte Rohr unter Ausnutzung des Memory-Effekts sich wieder aufweitet, um dadurch dicht von innen an dem Metallrohr anzuliegen. Schließlich ist es aus DE-A-21 39 388 bekannt, ein nahtloses Metallrohr auf einen vorgefertigten Kunststoffschlauch mit Hilfe einer Metallmantelpresse aufzupressen. Problematisch hierbei sind die Temperaturen, die in der Metallmantelpresse durch die Extrusion des Metalls entstehen und auf den Kunststoffschlauch einwirken.
Aufgabe der Erfindung ist es, ein Verfahren zum Herstellen eines zylindrischen, strangförmigen Kunstoff-Metall-Verbundteils zu schaffen, das sich durch eine hohe Maßeinhaitung auszeichnet. Ein Verfahren zur Herstellung eines strangförmigen Teils, gemäß dem Oberbegriff des Anspruchs 1, ist bereits aus dem Dokument AU 2 690 971 A bekannt. Dieses Dokument offenbart, das
- ein Hohlprofil aus Metall extrudiert wird,
- das extrudierte Metallhohlprofil abkühlt und/oder abgekühlt wird und
- in das extrudierte Metallhohlprofil nach oder während dessen Abkühlung ein ein- oder mehrlagiger Kunststoffstrang hineinextrudiert wird,
- wobei der Kunststoffstrang ein in das Metallhohlprofil eingeführtes, der Wärme des extrudierten Metallhohlprofils ausgesetztes Ausgabewerkzeugs eines Extruders passiert, welches eine Ausgabeöffnung aufweist, die innerhalb eines Bereichs des Metallhohlprofils angeordnet ist, in dem dieses gegenüber seiner Temperatur bei der Extrusion abgekühlt ist.
Bei dem erfindungsgemäßen Verfahren wird zunächst die metallische Lage bzw. Schicht des zylindrischen strangförmigen Teils extrudiert, d. h. durch kontinuierliches Strangpressen oder Extrusion hergestellt, wobei alsdann oder zeitgleich ein ein- oder mehrlagiger Kunststoffstrang in die metallische Schicht bzw. Lage hineinextrudiert wird. Diese Vorgehensweise hat den Vorteil, dass das Außenmaß des zylindrischen strangförmigen Teils durch den Strangpressvorgang der metallischen Schicht bzw. Lage, also durch den Strangpressvorgang für das Metallrohr, definiert ist. Eine Nachbearbeitung des hergestellten strangförmigen Teils zum Zwecke von dessen Durchmesserreduktion bzw. zum Zwecke einer Durchmesserreduktion des Metallrohres ist nicht erforderlich.

Das nach dem Strangpressvorgang erwärmte Metallrohr wirkt sich zusammen mit der erwärmten ein- oder mehrlagigen Kunststoffschmelze bezüglich einer innigen Haftung an dem Metallrohr positiv aus.

Die bei der Extrusion des Metalls entstehende Wärme ist bei weitem zu groß, als dass unmittelbar nach der Extrusion der Kunststoffstrang in das Metallhohlprofil hineinextrudiert werden kann. Hierzu bedarf es vielmehr eines Ortes innerhalb des Metallhohlprofils, der in Maschinenrichtung stromab der Extrusion des Metalls angeordnet ist. Dies wird erfindungsgemäß mit Hilfe eines in das Metallhohlprofil weit hineinragenden dornförmigen Ausgabewerkzeuges realisiert. Dieses Ausgabewerkzeug, das im wesentlichen nach Art eines Rohres bzw. Dorns ausgebildet ist, transportiert die Kunststoffschmelze. Damit diese Kunststoffschmelze über den verhältnismäßig langen Weg durch das Ausgabewerkzeug seine für die Extrusion erforderliche Temperatur beibehält, müsste man dieses Ausgabewerkzeug beheizen.

Überraschenderweise hat sich nun gezeigt, dass für die Aufheizung bzw. Temperierung des Ausgabewerkzeuges die Wärme, die von dem extrudierten Metallhohlprofil ausgeht, genutzt werden kann. Damit werden zwei Effekte erreicht, nämlich zum einen, dass sich das Metallhohlprofil durch Abgabe seiner Wärme an das Ausgabewerkzeug abkühlt, und zum anderen, dass das Ausgabewerkzeug temperiert wird, ohne andere externe Wärmequellen zu nutzen.

Nur durch die nachträgliche Extrusion der Kunststoffschmelze von innen in das nahtlos hergestellte, extrudierte Metallhohlprofil lassen sich die unterschiedlichen Materialien Metall und Kunststoff maßhaltig miteinander verarbeiten. Dabei wird die hohe Maßhaltigkeit dadurch erzielt, dass das Metallrohr nahtlos hergestellt ist (Extrusion). Das Aufpressen bzw. Aufextrudieren des Metallrohres auf ein vorgefertigtes Kunststoffrohr, was ebenfalls zu einer hohen Maßhaltigkeit führen würde, scheidet wegen der hohen Temperaturen des extrudierten Metallhohlprofils aus. Die Extrusion des Kunststoffstrangs in das extrudierte Metallhohlprofil hinein gelingt erfindungsgemäß dadurch, dass das Ausgabewerkzeug eine beträchtliche Länge aufweist, so dass die Kunststoffschmelze erst dann mit dem Metallhohlprofil in Kontakt kommt, wenn dieses bereits auf eine für den Kunststoff verträgliche Temperatur abgekühlt ist. Hierbei macht man sich, wie bereits oben erwähnt, zu Nutze, dass die Temperierung des Ausgabewerkzeuges über dessen volle Länge durch die Wärmeabgabe des extrudierten Metallhohlprofils erfolgt.

Mit dem erfindungsgemäßen Verfahren lassen sich insbesondere zylindrische, strangförmige Hohl- oder Vollprofilteile herstellen. Insbesondere ist das Verfahren geeignet für die Herstellung von Mehrschicht-Kunststoff-Metall-Verbundrohren.

Bei einer Weiterbildung der Erfindung lässt sich außen auf das Metallrohr eine ein- oder mehrlagige Kunststoffschicht vorzugsweise durch Extrusion aufbringen. Die Extrusion der außenliegenden Kunststoffschicht kann direkt auf das extrudierte Metallrohr oder nach dessen Abkühlung erfolgen. Werden mehrere Kunststoffschichten extrudiert, so kann dies durch Tandemextrusion der Einzellagen oder durch eine Coextrusion erfolgen.

Das Metallrohr besteht bei einer vorteilhaften Ausgestaltung der Erfindung vorzugsweise aus Aluminium oder einer Aluminiumlegierung. Bei den mehrlagigen Kunststoffschichten, die in das Metallrohr hineinextrudiert werden bzw. außen auf das Metallrohr aufgebracht werden können, handelt es sich vorzugsweise um thermoplastische Materialien, wobei die jeweils an das Metallrohr angrenzenden Kunststoffschichten thermoplastische Haftvermittler umfassen.

Das erfindungsgemäße Verfahren eignet sich insbesondere zur Herstellung von im Durchmesser größeren (beispielsweise ab 40 mm) Mehrschicht-Kunststoff/Metall-Verbundrohre, bei denen das Metallrohr aufgrund seiner Wanddicke nach seiner Herstellung nur mit großem Aufwand im Durchmesser reduziert werden kann, um in Kontakt mit dem innenliegenden Kunststoffstrang zu gelangen. Auf diese Durchmesserreduktion des Metallrohrs wird daher erfindungsgemäß verzichtet, indem der Kunststoffstrang in das fertig hergestellte Metallrohr hineinextrudiert wird (und zwar an dessen Innenseite). Der Nachteil einer Durchmesserreduktion des Metallrohrs besteht auch darin, dass es aufgrund der Umformung des Metalls zu Materialverhärtungen kommt, was sich wiederum nachteilig auf die Biegbarkeit des hergestellten Metall-Kunststoff-Verbundrohres auswirkt. Insoweit hat das erfindungsgemäße Verfahren auch Vorteile bei der Herstellung im Durchmesser kleinerer (beispielsweise bis 40 mm) Mehrschicht-Kunststoff/Metall-Verbundrohre, da auf die bei diesen Rohrdimensionen maschinell beherrschbare Durchmesserreduktion des Metallrohres verzichtet werden kann. Die Herstellung im Durchmesser kleinerer Mehrschicht-Kunststoff/Metall-Verbundrohre ist erfindungsgemäß nicht zuletzt auch deshalb möglich, weil das Ausgabewerkzeug zu seiner Temperierung nicht mit separaten Heizelementen oder dergleichen, die Bestandteil des Ausgabewerkzeugs sein müssten und dieses damit im Durchmesser vergrößern würden, erwärmt werden muss, da die erforderliche Wärme zur Temperierung des Ausgabewerkzeuges durch die Wärme des extrudierten Metallhohlprofils zur Verfügung gestellt wird.

Die Erwärmung des Ausgabewerkzeuges durch das sich abkühlende, extrudierte Metallhohlprofil wird zweckmäßigerweise durch eine thermische Kopplung zwischen beiden realisiert. Hierbei ist es besonders zweckmäßig, wenn das extrudierte Metallhohlprofil sich unter Kontakt mit dem Ausgabewerkzeug über dieses bewegt. Dabei kann das Ausgabewerkzeug die weitere Funktion der Formstabilisierung des extrudierten Metallhohlprofils innerhalb der Phase unmittelbar nach der Extrusion übernehmen. Bei dem Ausgabewerkzeug handelt es sich zweckmäßigerweise um ein Rohr oder dornförmiges Werkzeug, das einen Ringraum aufweist, an dessen Ausgabeende eine Ringdüse angeordnet ist. Der Ringraum, der durch zwei zueinander konzentrische Wände bzw. Flächen (z.B. Rohre) definiert ist, kann durch die Wände verbindende Stege oder dergleichen stabilisiert sein. Diese Stege werden von der den Ringraum passierenden Kunststoffschmelze umströmt, was für den Extrusionsprozess des Kunststoffstrangs nicht von Nachteil ist. Bei einem mehrschichtigen Kunststofifschmelzenstrom sollte der Ringraum über seine gesamte Länge frei sein. Die sich zwischen den Ringraum bildenden Rohre sind dann an ihren einen Enden gegeneinander fixiert.
Das erfindungsgemäße Verfahren eignet sich auch, wie bereits oben erwähnt, zur Herstellung von Vollprofilteilen. Beispielsweise kann das erfindungsgemäße Verfahren zur Herstellung eines von Kunststoff und Metall umgebenen Kabels oder eines anderen Voll- oder Hohlprofils in im wesentlichen nicht deformierbarer und temperaturbeständiger Form, z.B. ein Metallrohr, eingesetzt werden. Das Kabel bzw. Profil wird durch die Ringdüsen der Extruder für den Kunststoffstrang und das Metallrohr zentrisch hindurchgeführt, so dass bei der Extrusion des Kunststoffstrangs der Raum zwischen dem zentrisch angeordneten Leiter und dem Metallrohr mit Kunststoffmaterial ausgefüllt wird. Bei diesem Kunststoffmaterial kann es sich beispielsweise um ein schäumbares Kunststoffmaterial handeln. Hierbei ist ein Haftvermittler nicht zwingend erforderlich, wenn gewährleistet ist, dass der schäumbare Kunststoff selbst ausreichend stabil an der Innenseite des Metallrohres haftet.

Die Erfindung wird nachfolgend anhand der Ausführungsbeispiele und unter Bezugnahme auf die Zeichnung näher erläutert. Im einzelnen zeigen dabei:
- Fig. 1: die Extrusions-Anlagenkomponenten für die Herstellung eines zylindrischen, strangförmigen Hohlprofilteils gemäß einem ersten Ausführungsbeispiel der Erfindung,
- Fig. 2: die Extrusions-Anlagenkomponenten für die Herstellung eines zylindrischen, strangförmigen Hohlprofilteils gemäß einem zweiten Ausführungsbeispiel der Erfindung, und
- Fig. 3: die Extrusions-Anlagenkomponenten für die Herstellung eines zylindrischen, strangförmigen Vollprofilteils gemäß einem ersten und zweiten Ausführungsbeispiel der Erfindung.

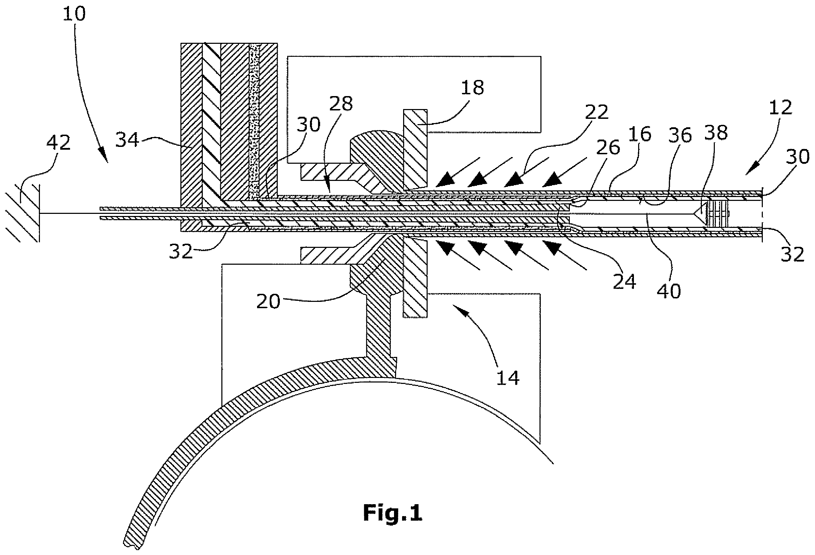

Fig. 1 zeigt schematisch die wesentlichen Anlagenkomponenten einer Vorrichtung 10 zur Herstellung eines Mehrschicht-Kunststoff/Metall-Verbundrohres 12. Zur Vorrichtung 10 gehört ein Extruder 14 bzw. eine Strangpress-Einheit zur Herstellung eines Aluminiumrohres 16. Die Ringdüse des Extruders 14 ist bei 18 dargestellt, während das für den plastischen Verformungsprozess erwärmte Metall mit 20 bezeichnet ist. Das extrudierte Aluminiumrohr 16 wird beispielsweise bei Temperaturen zwischen 450 und 500 °C extrudiert und kühlt dann nach dem Austritt aus der Düse 18 ab (beispielsweise auf 200 bis 250 °C, was bei 22 angedeutet ist).

In das extrudierte Metallrohr 16 ist durch die Ringdüse 18 hindurch ein hohler Dorn 24 zentrisch eingeführt, der an seinem einen Ende eine Ringdüse 26 aufweist, über die ein zweilagiger hohlzylindrischer Kunststoffstrang 28 austritt, der außen eine Kunststoff-Haftvermittlerschicht 30 und innen eine das spätere Basisrohr bildende Innenkunststoffschicht 32 umfasst, Beide Kunststoffschichten werden über einen Coextruder 34 gemeinsam in das abgekühlte Metallrohr 16 hineinextrudiert, und zwar gegen dessen Innenseite 36. Damit die Kunststoffschmelze dort zuverlässig verbleibt, wird durch den Dorn 24 ein Gas, z.B. Luft, in den Kunststoffschmelzeschlauch (hohlzylindrischer Kunststoffschmelzestrang 28) eingeleitet und damit ein Überdruck aufgebaut. Der Überdruck bleibt im Kunststoffrohrstrang 28 durch einen in diesem angeordneten Stopfen 38 aufrechterhalten, der über ein durch den Hohldorn 24 hindurchgeführtes Seil 40 außerhalb der Extrusionskomponenten der Vorrichtung 10 bei 42 befestigt ist. Anstelle des Stopfens 38 kann das hergestellte Metallrohr 16 mit innenliegendem Kunststoffstrang abgequetscht werden, um ein Entweichen des Überdrucks zu vermeiden.

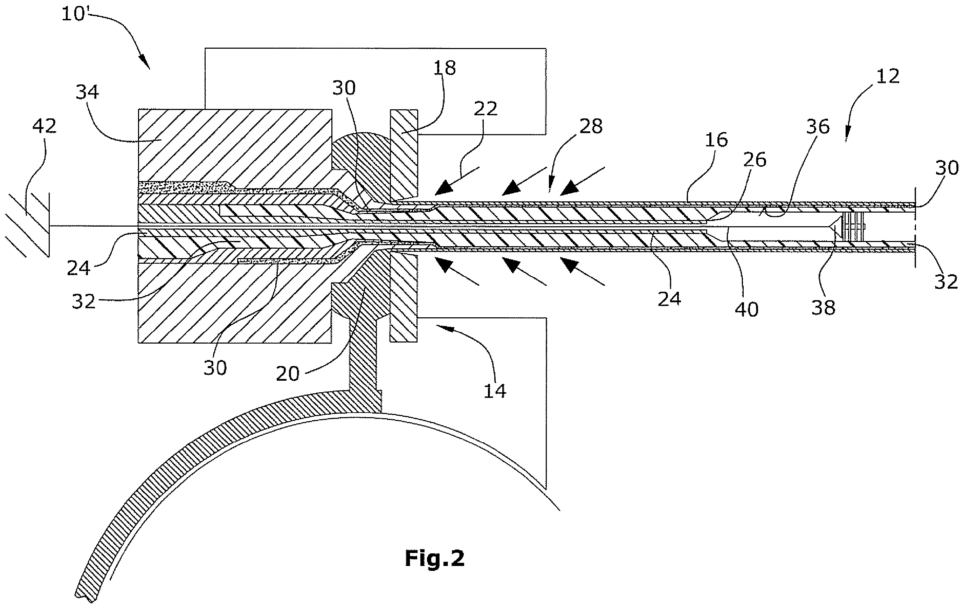

Fig. 2 zeigt eine geringfügig abgewandelte Variante 10' einer Vorrichtung zur Herstellung eines Mehrschicht-Kunststoff/Metall-Verbundrohres 12. Soweit die in Fig. 2 gezeigten Anlagenkomponenten identisch bzw. funktionsgleich mit den Anlagenkomponenten gemäß Fig. 1 sind, sind sie mit den gleichen Bezugszeichen versehen.

Im Unterschied zur Vorrichtung 10 der Fig. 1 werden bei der Vorrichtung 10' der Fig. 2 das Metallrohr 16 und der Kunststoffstrang 28 coextrudiert. Ansonsten läuft der Herstellungsprozess so, wie oben beschrieben, ab.

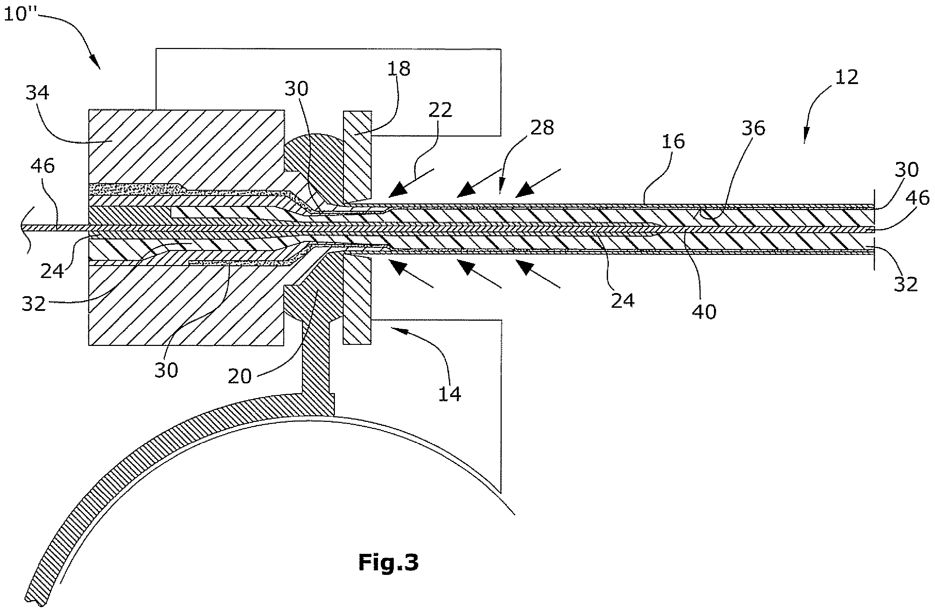

Fig. 3 zeigt eine Vorrichtung 10 ", die ähnlich zur Vorrichtung 10' der Fig. 2 aufgebaut ist, bei Fig. 3 jedoch der Herstellung eines zylindrischen, strangförmigen Voll- oder Hohlprofilteils 44 in im wesentlichen nicht deformierbarer und temperaturbeständiger Form dient. Die sich in den Anlagenkomponenten und Elementen der Figuren 1 und 2 gleichenden Teile sind in Fig. 3 mit den gleichen Bezugszeichen versehen.

Das Metallrohr 16 und der Kunststoffstrang 28 werden bei der Vorrichtung 10" der Fig. 3 wiederum im wesentlichen coextrudiert. Durch den Hohldorn 24 des Extruders 34 für den Kunststoffstrang 28 ist ein elektrischer Leiter 46 hindurchgeführt, der nach dem Verlassen des Hohldorns 24 von dem Material des Kunststoffstrangs 28 eingebettet und umhüllt wird, so dass sich das Kunststoffmaterial zwischen der Innenseite 36 des Metallrohres 16 und dem elektrischen Leiter 46 befindet. Mit der Vorrichtung 10" der Fig. 3 lassen sich also beispielsweise elektrisch isolierte Kabel herstellen, die ein metallisches Rohr aufweisen, welches den elektrischen Leiter 46 unter Zwischenschaltung eines Kunststoffmaterials beinhaltet.

Bezüglich der in den Figuren 1 bis 3 gezeigten Vorrichtungen 10, 10' und 10" sei noch gesagt, dass diese Vorrichtungen noch zusätzlich einen oder mehrere Extruder oder einen Coextruder zum Aufbringen ein- oder mehrlagiger Kunststoffschichten außen auf das Metallrohr 16 umfassen können. Diese bei der Rohrherstellung bekannten zusätzlichen Extruder sind aus Vereinfachungsgründen in den Figuren 1 bis 3 nicht eingezeichnet.

## Patentansprüche

1. Verfahren zur Herstellung eines strangförmigen Teils, bei dem
- ein Hohlprofil (16) aus Metall extrudiert wird,
- das extrudierte Metallhohlprofil (16) abkühlt und/oder abgekühlt wird und
- in das extrudierte Metallhohlprofil (16) nach oder während dessen Abkühlung ein ein- oder mehrlagiger Kunststoffstrang (28) hineinextrudiert wird,
- wobei der Kunststoffstrang (28) ein in das Metallhohlprofil (16) eingeführtes, der Wärme des extrudierten Metallhohlprofils (16) ausgesetztes Ausgabewerkzeugs (24) eines Extruders (34) passiert, welches eine Ausgabeöffnung (26) aufweist, die innerhalb eines Bereichs des Metallhohlprofils (16) angeordnet ist, in dem dieses gegenüber seiner Temperatur bei der Extrusion abgekühlt ist, **dadurch gekennzeichnet, dass**
- das Ausgabewerkzeug (24) thermisch mit dem Metallhohlprofil (16) gekoppelt ist und durch dieses temperiert wird durch dass das Ausgabewerkzeug (24) die Innenseiten des Metallhohlprofils (16) kontaktiert.

2. Verfahren nach Anspruch 1, **dadurch gekennzeichnet, dass** außen auf das Metallhohlprofil (16) eine ein- oder mehrlagige Kunststoffschicht vorzugsweise durch Extrusion, Tandemextrusionen oder Coextrusion aufgebracht wird.

3. Verfahren nach einem der Ansprüche 1 bis 2, **dadurch gekennzeichnet, dass** der in das Metallhohlprofil (16) hineinextrudierte ein- oder mehrlagige Kunststoffstrang (28) als Kunststoffrohr ausgebildet wird und dass innerhalb des Kunststoffrohres zum Andrücken des Kunststoffrohres gegen das Metallrohr (16) ein Überdruck erzeugt wird.

4. Verfahren nach einem der Ansprüche 1 bis 2, **dadurch gekennzeichnet, dass** der ein- oder mehrlagige Kunststoffstrang (28) als Vollprofil ausgebildet wird und dass in das Vollprofil während dessen Extrusion ein Voll- oder Hohlprofilteil in im wesentlichen nicht deformierbarer und temperaturbeständiger Form, insbesondere ein ein- oder mehradriger elektrischer Leiter (46) eingebracht wird.

5. Verfahren nach einem der Ansprüche 1 bis 4, **dadurch gekennzeichnet, dass** das Metallhohlprofil (16) ein unterhalb seines Schmelzpunktes plastisch verformbares und extrudierbares Metall oder eine unterhalb ihres Schmelzpunktes plastisch verformbare und extrudierbare Metalllegierung aufweist.

6. Verfahren nach Anspruch 5, **dadurch gekennzeichnet, dass** das Metall Aluminum oder die Metalllegierung eine Aluminiumlegierung aufweist.

7. Verfahren nach einem der Ansprüche 1 bis 6, **dadurch gekennzeichnet, dass** der Kunststoffstrang (28) eine Außenlage (30) aus einem Haftvermittler und eine an die Außenlage (30) angrenzende Polymermateriallage aufweist.

8. Verfahren nach Anspruch 2 oder einem der vorhergehenden Ansprüche, soweit auf Anspruch 3 rückbezogen, **dadurch gekennzeichnet, dass** die außen auf das Metallhohlprofil (16) aufgebrachte Kunststoffschicht eine an das Metallhohlprofil (16) angrenzende Innenlage aus Haftvermittler und eine an diese Innenlage angrenzende Außenlage aus Polymermaterial aufweist.

9. Verfahren nach einem der Ansprüche 1 bis 8, **dadurch gekennzeichnet, dass** das Metallrohr und der Kunststoffstrang (28) coextrudiert oder durch aufeinanderfolgend angeordnete Extruder erzeugt werden.

10. Verfahren nach einem der Ansprüche 1 bis 9, **dadurch gekennzeichnet, dass** das Metallhohlprofil (16) ein Metallrohr ist.

11. Verfahren nach einem der Ansprüche 1 bis 10, **dadurch gekennzeichnet, dass** der Kunststoffstrang (28) ein insbesondere aufschäumbares Kunststoffmaterial aufweist, das haftende oder nicht haftende Eigenschaften zum Metall aufweist.

12. Verfahren nach einem der Ansprüche 1 bis 11, **dadurch gekennzeichnet, dass** das Ausgabewerkzeug (24) einen Dorn mit einem Ringraum aufweist, an dessen axialem Ende sich eine Ringdüse als Ausgabeöffnung (26) des Doms befindet.

## Claims

1. A method for producing a strand-shaped part, in which method
- a hollow profile (16) made of metal is extruded,
- the extruded hollow metal profile (16) cools and/or is cooled,
and,
- a single-layer or multi-layer plastic strand (28) is extruded into the extruded hollow metal profile (16) after it has cooled or while it is cooling,
- wherein the plastic strand (28) fits an output tool (24) of an extruder (34) that is inserted into the hollow metal profile (16) and that is exposed to the heat of the extruded hollow metal profile (16) and that has a an output opening (26) that is arranged within a region of the hollow metal profile (16) in which it is cooled from its temperature at extrusion, **characterized in that**
- the output tool (24) is thermally coupled to the hollow metal profile (16) and the temperature of the output tool (24) is controlled thereby **in that** the output tool (24) contacts the inner sides of the hollow metal profile (16).

2. The method according to claim 1, **characterized in that** a single-layer or multi-layer plastic coat is applied to the hollow metal profile (16), preferably by extrusion, tandem extrusion, or coextrusion.

3. The method according to any of claims 1 through 2, **characterized in that** the single-layer or multi-layer plastic strand (28) extruded into the hollow metal profile (16) is embodied as a plastic tube and **in that** a positive pressure is generated within the plastic tube for pressing the plastic tube against the metal tube (16).

4. The method according to any of claims 1 or 2, **characterized in that** the single-layer or multi-layer plastic strand (28) is embodied as a solid profile and **in that** a solid profile or hollow profile part, in an essentially non-deformable and temperature resistant form, especially a single-conductor or multiconductor electrical conductor (46), is added to the solid profile while it is being extruded.

5. The method according to any of claims 1 through 4, **characterized in that** the hollow metal profile (16) has a metal that is plastically deformable and extrudable below its melting point or has a metal alloy that is plastically deformable and extrudable below its melting point,

6. The method according to claim 5, **characterized in that** the metal has aluminum or the metal alloy has an aluminum alloy.

7. The method according to any of claims 1 through 6, **characterized in that** the plastic strand (28) has an outer layer (30) made of an adhesive and a polymer material layer bordering the outer layer (30).

8. The method according to claim 2 or any of the preceding claims that refer back to claim 3, **characterized in that** the plastic layer applied exteriorly to the hollow metal profile (16) has an inner layer that is made of adhesive and borders the hollow metal profile (16) and has an outer layer that is made of polymer material and borders this inner layer.

9. The method according to any of claims 1 through 8, **characterized in that** the metal tube and the plastic strand (28) are coextruded or produced by successively arranged extruders.

10. The method according to any of claims 1 through 9, **characterized in that** the hollow metal profile (16) is a metal tube.

11. The method according to any of claims 1 through 10, **characterized in that** the plastic strand (28) has an in particular foamable plastic material that has adhesive or non-adhesive properties relative to the metal.

12. The method according to any of claims 1 through 11, **characterized in that** the output tool (24) has a mandrel having an annular space, at the axial end of which an annular nozzle is disposed as the output opening (26) of the mandrel.

## Revendications

1. Procédé de fabrication d'une pièce en forme de boudin, dans lequel
- un profil creux (16) en métal est extrudé,
- le profil creux métallique extrudé (16) refroidit et/ou est refroidi et
- un boudin en plastique (28) à une ou plusieurs couches est extrudé dans le profil creux métallique extrudé (16) après ou pendant son refroidissement,
- dans lequel le boudin en plastique (28) passe dans un outil de distribution (24) d'une extrudeuse (34) introduit dans le profil creux métallique (16), soumis à la chaleur du profil creux métallique extrudé (16), lequel outil présente une ouverture de distribution (26), qui est agencée à l'intérieur d'une zone du profil creux métallique (16), dans laquelle celui-ci est refroidi par rapport à sa température lors de l'extrusion, **caractérisé en ce que**
- l'outil de distribution (24) est couplé thermiquement au profil creux métallique (16) et est mis à température par celui-ci par que l'outil de distribution (24) touche les faces intérieures du profil creux métallique (16).

2. Procédé selon la revendication 1, **caractérisé en ce qu'**une couche en plastique à une ou plusieurs couches est appliquée de préférence par extrusion, extrusions tandem et coextrusion à l'extérieur sur le profil creux métallique (16).

3. Procédé selon l'une quelconque des revendications 1 à 2,
**caractérisé en ce que** le boudin en plastique (28) à une ou plusieurs couches extrudé dans le profil creux métallique (16) est réalisé en tant que tube en plastique et qu'une surpression est générée à l'intérieur du tube en plastique pour presser le tube en plastique contre le tube en métal (16).

4. Procédé selon l'une quelconque des revendications 1 à 2,
**caractérisé en ce que** le boudin en plastique (28) à une ou plusieurs couches est réalisé en tant que profil plein et qu'une pièce de profil creux ou plein de forme sensiblement non déformable et résistante à la température, en particulier un conducteur électrique (46) à un ou plusieurs brins est introduite dans le profil plein pendant son extrusion.

5. Procédé selon l'une quelconque des revendications 1 à 4,
**caractérisé en ce que** le profil creux métallique (16) présente un métal extrudable et plastiquement déformable sous son point de fusion ou un alliage métallique extrudable et plastiquement déformable sous son point de fusion.

6. Procédé selon la revendication 5,
**caractérisé en ce que** le métal présente de l'aluminium ou l'alliage métallique présente un alliage d'aluminium.

7. Procédé selon l'une quelconque des revendications 1 à 6,
**caractérisé en ce que** le boudin en plastique (28) présente une couche extérieure (30) en un agent adhésif et une couche en matériau polymère adjacente à la couche extérieure (30).

8. Procédé selon la revendication 2 ou l'une quelconque des revendications précédentes, s'il est fait référence à la revendication 3, **caractérisé en ce que** la couche en plastique appliquée à l'extérieur sur le profil creux métallique (16) présente une couche intérieure en agent adhésif adjacente au profil creux métallique (16) et une couche extérieure en matériau de polymère adjacente à cette couche intérieure.

9. Procédé selon l'une quelconque des revendications 1 à 8,
**caractérisé en ce que** le tube en métal et le boudin en plastique (28) sont coextrudés ou générés par des extrudeuses agencées l'une à la suite de l'autre.

10. Procédé selon l'une quelconque des revendications 1 à 9,
**caractérisé en ce que** le profil creux métallique (16) est un tube en métal.

11. Procédé selon l'une quelconque des revendications 1 à 10,
**caractérisé en ce que** le boudin en plastique (28) présente un matériau plastique en particulier moussant, qui présente des propriétés adhésives ou non adhésives par rapport au métal.

12. Procédé selon l'une quelconque des revendications 1 à 11,
**caractérisé en ce que** l'outil de distribution (24) présente un mandrin avec un espace annulaire, à l'extrémité axiale duquel se trouve une buse annulaire en tant qu'ouverture de distribution (26) du mandrin.
